# EUROPÄISCHE PATENTSCHRIFT

(11) **EP 2 431 124 B1**
(45) Veröffentlichungstag und Bekanntmachung des Hinweises auf die Patenterteilung: **17.10.2012**
(21) Anmeldenummer: 10009900.1
(22) Anmeldetag: 20.09.2010
(51) Int. Cl.: B23Q 7/04, B23Q 11/00, B23Q 39/04, B23B 3/30

(54) **Vertikaldrehmaschine**
Vertical lath
Tour verticale

(43) Veröffentlichungstag der Anmeldung: 21.03.2012
(73) Patentinhaber: Gildemeister Drehmaschinen GmbH, 33689 Bielefeld (DE)
(72) Erfinder: Lube, Siegfried, 73235 Weilheim/Teck (DE); Walz, Jürgen, Dr., 72636 Frickenhausen (DE)
(74) Vertreter: Schober, Mirko

(56) Entgegenhaltungen:
- EP-A1- 2 055 413
- DE-A1- 19 904 859
- DE-A1-102009 009 969

## Beschreibung

Die Erfindung betrifft eine Vertikaldrehmaschine mit einer Hauptspindel, einer Gegenspindel, einer Werkstückbereitstellungsstation und einer Werkstückablagestation, gemäß dem Oberbegriff des Anspruchs 1, wie z.B. aus der DE-A-199 04 859 bekannt.

Derartige Vertikaldrehmaschinen sind dadurch charakterisiert, dass das Werkstück bei der Bearbeitung in der Hauptspindel hängend, d.h. im Wesentlichen nach unten weisend, um eine zumindest im Wesentlichen vertikale Achse rotiert. Die Gegenspindel dient dabei dazu, das Werkstück auch an den Bereichen bearbeiten zu können, an denen es von dem Spannmittel der Hauptspindel bei der Bearbeitung in der Hauptspindel gehalten wird. Hierfür wird das Werkstück von der Haupt- an die Gegenspindel übergeben und von den Spannmitteln der Gegenspindel an Bereichen gehalten, die bereits in der Hauptspindel bearbeitet worden sind.

Eine Vertikaldrehmaschine ist auch aus der DE 42 12 175 A1 bekannt. Bei dieser Maschine nimmt die Hauptspindel das Werkzeug auf, welches zur Bearbeitung des an der Gegenspindel aufgenommenen Werkstücks dient. Durch den Wechsel zwischen Werkstückspannung und Werkzeugspannung an der Hauptspindel treten bei derartigen Maschinen jedoch erhebliche Nebenzeiten auf, die sich nachteilig auf deren Produktivität auswirken.

Weiterhin ist aus der DE 197 53 898 A1 eine Vertikaldrehmaschine bekannt, welche mit zwei unabhängig voneinander verfahrbaren Spindeln arbeitet und durch den jeweiligen Spindeln zugeordnete Werkzeuge die voneinander unabhängige Bearbeitung der Werkstücke, die an den jeweiligen Spindeln aufgenommen sind, ermöglicht. Bei dieser Bauweise ist jedoch ein zusätzlicher Greifer notwendig, der dazu dient, das Werkstück aus der Gegenspindel zu entfernen und einer Werkstückablagestation zuzuführen. Dies erhöht zum einen die Kosten der Maschine, zum anderen wird durch den Greifer zusätzlicher Bauraum benötigt.

Aus der DE 299 24 531 U1 ist eine Vertikaldrehmaschine mit Schwenkspindeln bekannt, welche nebeneinander angeordnet sind und durch Schwenkantriebe aufeinander zu ausgerichtet werden können, wodurch die Werkstückübergabe ermöglicht ist. Dabei kann die Aufnahme und Ablage der Werkstücke aus beiden Spindeln nach unten hin erfolgen. Der Nachteil jedoch ist, dass bei dieser Bauweise beide Spindeln schwenkbar gelagert werden müssen, was nachteilig ist, da im Hinblick auf optimierte Arbeitszeiten in der Regel der Antrieb der Gegenpindel deutlich kleiner ausgelegt werden kann als der der Hauptspindel, was eine verschwenkbare Ausführung der Hauptspindel unwirtschaftlich erscheinen lässt, da dies bei leistungsstarken Antrieben einen erheblichen technischen Aufwand erfordert.

Der Erfindung liegt daher die Aufgabe zugrunde, eine Vertikaldrehmaschine aufzuzeigen, die eine Bearbeitung in möglichst kurzen Taktzeiten bei einer kostengünstigen Maschinenbauweise und gleichzeitig einen möglichst geringen Bedarf an Bauraum und Aufstellfläche ermöglicht.

Die Aufgabe wird gelöst durch eine Vertikaldrehmaschine, im Folgenden "Drehmaschine", mit den Merkmalen des Anspruchs 1. Die abhängigen Unteransprüche betreffen Merkmale vorteilhafter Ausführungsformen.

Die erfindungsgemäße Drehmaschine weist dazu eine Hauptund eine Gegenspindel auf und mindestens ein zur Bearbeitung des an der Hauptspindel aufgenommenen Werkstücks geeignet angeordnetes Werkzeug sowie eine Werkstückbereitstellungsstation und eine Werkstückablagestation. Die Hauptspindel ist entlang einer von der Hauptspindelachse linear unabhängigen, vorzugsweise zur Hauptspindelachse senkrechten Richtung entlang eines Maschinengestells verfahrbar und geeignet, an einer Position entlang des Verfahrwegs ein Werkstück von der Werkstückbereitstellungsstation aufzunehmen. Die Übergabe des Werkstücks von der Werkstückbereitstellungsstation an die Hauptspindel wird dabei dadurch realisiert, dass die Hauptspindel in Richtung ihrer Hauptspindelachse verfahrbar ist.

Die Gegenspindel ist um eine Achse A schwenkbar ausgeführt. Dabei ist vorzugsweise ein Schwenkantrieb vorgesehen, der so ausgebildet ist, dass er lediglich das Anfahren einzelner Verschwenkpositionen ermöglicht. Dadurch ist es möglich, den Antrieb vergleichsweise kostengünstig auszuführen, verglichen mit einem Antrieb, der ein definiertes stufenloses Verschwenken der Achse ermöglicht.

Dabei ist die Gegenspindel in eine erste Position verschwenkbar, in der die Spindelachsen von Hauptspindel und Gegenspindel zusammenfallen, wodurch eine Übergabe des Werkstücks von der Hauptspindel auf die Gegenspindel ermöglicht ist. Vorzugsweise ist die Hauptspindel hierfür entlang ihrer Spindelachse verfahrbar. Weiterhin ist die Gegenspindel in eine zweite Position verschwenkbar, in der das von der Gegenspindel gehaltene Werkstück von einem weiteren Werkzeug bearbeitet werden kann, wobei die Orientierung der Gegenspindelachse nicht zwingend eine Vertikale sein muss. Der Begriff "Vertikaldrehmaschine" bezieht sich bei der erfindungsgemäßen Drehmaschine auf die Orientierung der Spindelachse der Hauptspindel.

Weiterhin ist die Gegenspindel der erfindungsgemäßen Drehmaschine in eine dritte Position verschwenkbar, in der die Übergabe des Werkstücks an eine Ablagestation ermöglichst ist. Da die Verschwenkbewegungen insbesondere mit den oben beschriebenen Antrieben sehr schnell erfolgen können, ist bei einer derartigen erfindungsgemäßen Drehmaschine eine simultane Durchführung von Werkstückaufnahme und Ablage möglich. Weiterhin können die Werkstücke in Gegenspindel und Hauptspindel simultan bearbeitet werden. Die erfindungsgemäße Anordnung der Achsen ermöglicht dabei die räumliche Nähe von Werkstückbearbeitung in der Hauptspindel und Gegenspindel, wodurch kurze Verfahrwege der Hauptspindel realisiert werden können und in Zusammenwirkung mit den schnellen Verschwenkbewegungen der Gegenspindel zu kurzen Taktzeiten führen.

Erfindungsgemäß ist vorgesehen, dass die Orientierungsrichtung der Schwenkachse A, der Gegenspindel und/oder die Spindelachse der Gegenspindel in der zweiten Position, in der die Bearbeitung des in der Gegenspindel gehaltenen Werkstücks ermöglicht ist, linear unabhängig von den Orientierungsrichtungen der Spindelachse Z¹ und der Verfahrrichtung der Hauptspindel entlang des Maschinenbettes ist. Diese erfindungsgemäße Anstellung der Achsen gegeneinander ermöglicht die besonders kompakte Anordnung der verschiedenen Maschinenkomponenten und ermöglicht so den Aufbau einer Drehmaschine mit einem geringen Bedarf an Aufstellungsfläche und einer guten Bauraumausnutzung, was aufgrund der kurzen Verfahrwege zusätzlich zu niedrigen Taktzeiten führt. Weiterhin werden aufgrund des verringerten Materialbedarfs die Maschinenkosten reduziert.

Vorzugsweise ist die Gegenspindel an einem um die Schwenkachse der Gegenspindel schwenkbaren Werkzeugträger angeordnet. Bei dem Werkzeuträger kann es sich insbesondere um einen Werkzeugrevolver handeln. Hierdurch wird ermöglicht, den Bauraum, die Verfahrwege und den Materialbedarf weiter zu reduzieren, da Werkzeuge, die zur Bearbeitung an der Hauptspindel dienen, zweckmäßiger Weise an dem Werkzeugrevolver, an dem auch die Gegenspindel angeordnet ist, angeordnet werden können. Da es moderne Steuerungen erlauben, die Bewegungen verschiedener Maschinenachsen in einfacher Weise aufeinander abzustimmen, kann so die synchronisierte Bearbeitung an Gegenspindel und Hauptspindel unter Ausnutzung gemeinsamer Verfahrachsen bei einer sehr kompakten Bauweise ermöglicht werden.

Vorteilhafter Weise ist an einer dem Arbeitsraum zugewandten Seitenwand des Maschinengestells im Verfahrbereich der Hauptspindel zwischen der Werkstückbereitstellungsstation und der Position, in der durch Zusammenfallen der Spindelachsen von Haupt- und Gegenspindel die Übergabe des Werkstücks ermöglicht ist, mindestens ein zusätzliches Werkzeug angeordnet. Dabei kann es sich auch um eine Mehrzahl, beispielsweise an einem weiteren Werkzeugträger angeordnete Werkzeuge handeln. Der Vorteil des zusätzlichen Werkzeugs ist, dass weitere Bearbeitungsschritte an der Hauptspindel unabhängig von Bewegungen der Gegenspindel durchgeführt werden. Hierdurch erhöht sich die Flexibilität bei der Optimierung der simultanen Bearbeitungsprozesse an Haupt- und Gegenspindel.

Vorteilhafter Weise ist das weitere Werkzeug, mit dem das von der Gegenspindel gehaltene Werkstück bearbeitet werden kann, an einer dem Arbeitsraum zugewandten Seitenwand des Maschinengestells angeordnet. Diese Positionierung des Werkzeugs lässt sich zum einen konstruktiv sehr einfach und kostengünstig realisieren, zum anderen ermöglicht diese Positionierung des Werkzeugs in Zusammenwirkung mit der erfindungsgemäßen Achsorientierung eine auch im Hinblick auf die Werkzeugaufnahme sehr kostengünstige und kompakte Bauweise.

Vorzugsweise kann eine Mehrzahl weiterer Werkzeuge zur Bearbeitung des in der Gegenspindel gehaltenen Werkstücks vorgesehen werden, die vorzugsweise die Bearbeitung des in der Gegenspindel gehaltenen Werkstücks in mehreren Verschwenkpositionen der Gegenspindel ermöglichen. Auf diese Weise kann der Wechsel des Bearbeitungswerkzeugs für die Gegenspindel in einfacher Weise realisiert werden, indem die Spindel zwischen den Eingriffspositionen der Werkzeuge verschwenkt wird. Dies ermöglicht die Bearbeitung des Werkstücks an der Gegenspindel mit mehreren Werkzeugen, ohne dass hierfür ein weiterer Werkzeugträger, beispielsweise Werkzeugrevolver notwendig wird. Diese Variante ist insbesondere dann sinnvoll, wenn die Werkzeuge auf eigenen Führungseinrichtungen, insbesondere Führungen, welche vorzugsweise entlang und/oder rechtwinklig zu der Gegenspindelachse in ihrer jeweiligen Eingriffsposition bewegt werden können, angeordnet sind, um die Zustellung bzw. den Vorschub unabhängig von den Lagen der anderen Maschinenachsen realisieren zu können.

Vorzugsweise ist eine Relativbewegung zwischen dem Werkzeug, welches an dem in der Gegenspindel aufgenommenen Werkstück angreift, und der Gegenspindel entlang der Gegenspindelachse ermöglicht, wenn sich die Gegenspindel in der Verschwenkposition zur Bearbeitung des in der Gegenspindel aufgenommenen Werkzeugs befindet. Vorzugsweise ist hierfür die Gegenspindel selbst verfahrbar. Hierdurch werden axiale Vorschubbewegungen bei der Bearbeitung des Werkstücks in der Gegenspindel ermöglicht, was sich insbesondere in Verbindung mit der Aufnahme des Werkzeugs an der dem Arbeitsraum zugewandten Seitenwand des Maschinengestells auf konstruktiv einfache Weise realisieren lässt.

Die Werkstückablage ist bevorzugt so angeordnet, dass sie sich in der Verschwenkposition der Gegenspindel, in der das an dieser aufgenommene Werkstück bearbeitet werden kann, unterhalb der Gegenspindel befindet und dabei vorzugsweise an der dem Arbeitsraum zugewandten Seitenwand des Maschinengestells angeordnet ist. Unterhalb bedeutet in diesem Zusammenhang, dass sich die horizontale Ebene, in der sich die Werkstückablage befindet, unterhalb der Ebene befindet, in der die Gegenspindel positioniert ist. Die Werkstückablage muss sich somit nicht zwingend direkt unter der Gegenspindel befinden. Auch bei diesem Merkmal kann die Möglichkeit der Anordnung des Maschinenelements an der Seitenwand genutzt werden, um eine besonders kompakte Bauweise zu realisieren. Dabei kommt insbesondere in Kombination mit den vorstehend genannten Merkmalen bei der Aufnahme weiterer Maschinenelemente an der Seitenwand zunehmend der Vorteil zum Tragen, dass für die Positionierung verschiedener exakt aufeinander abzustimmender Maschinenelemente im Wesentlichen die präzise Fertigung der Seitenwand gefordert ist, was letztendlich zu einer kostengünstigen Herstellbarkeit der Maschine führt. Die Werkstückablage kann sich dabei aber auch auf der von der Bearbeitungsposition abgewandten Seite der Schwenkbaren Gegenspindel befinden, was den Vorteil hat, dass die Spanerzeugung nicht im Bereich der Werkzeugablage stattfindet. Wenn die Schwerkraft zum Auswerfen des Werkstücks aus der Gegenspindel nicht ausreicht, beispielsweise wenn dies bei horizontaler Spindelachsenlage geschehen soll, so kann die Spindel über einen Auswerfer verfügen, beispielsweise ein in der Spindelachse vorgesehenes federndes Element, welches geeignet ist, das Werkstück aus dem Futter zu drücken.

Vorzugsweise, jedoch nicht zwingend, liegen die vorstehend als linear unabhängig beschriebenen Achsen derart orientiert im Raum, dass ihre Orientierungsrichtungen zueinander in rechten Winkeln verlaufen. Vorteilhafter Weise ist dabei die Gegenspindel relativ zum Maschinengestell entlang ihrer Schwenkachse A und/oder parallel zu der Richtung, entlang der die Hauptspindel entlang des Maschinengestells verfahren werden kann, verfahrbar. Dies ermöglicht Bewegungen der Gegenspindel, die gleichzeitig zum radialen Zustellen der Werkzeuge, welche das in der Gegenspindel aufgenommene Werkstück bearbeiten, und zur Bearbeitung des an der Hauptspindel aufgenommenen Werkstücks genutzt werden können.

Mit dem gleichen Vorteil verbunden ist eine relative Verfahrbarkeit der Gegenspindel relativ zum Maschinengestell in einer von ihrer Schwenkachse und/oder der Verfahrrichtung der Hauptspindel, entlang des Maschinengestells linear unabhängigen, vorzugsweise senkrecht orientierten Richtung. Vorzugsweise ist die Richtung, entlang der die Hauptspindel entlang des Maschinengestells verfahren werden kann, waagerecht entlang des Maschinengestells orientiert.

Vorzugsweise ist die Verschwenkposition der Gegenspindel, in der die Übergabe des Werkstücks an die Werkstückablagestation erfolgt, so gewählt, dass die Übergabe durch die Wirkung der Schwerkraft auf das Werkstück ermöglicht ist. Hierdurch lässt sich die Werkstückübergabe auf einfachste Weise realisieren. Im einfachsten Fall muss das Werkstück nur von dem Spannmittel der Gegenspindel freigegeben werden.

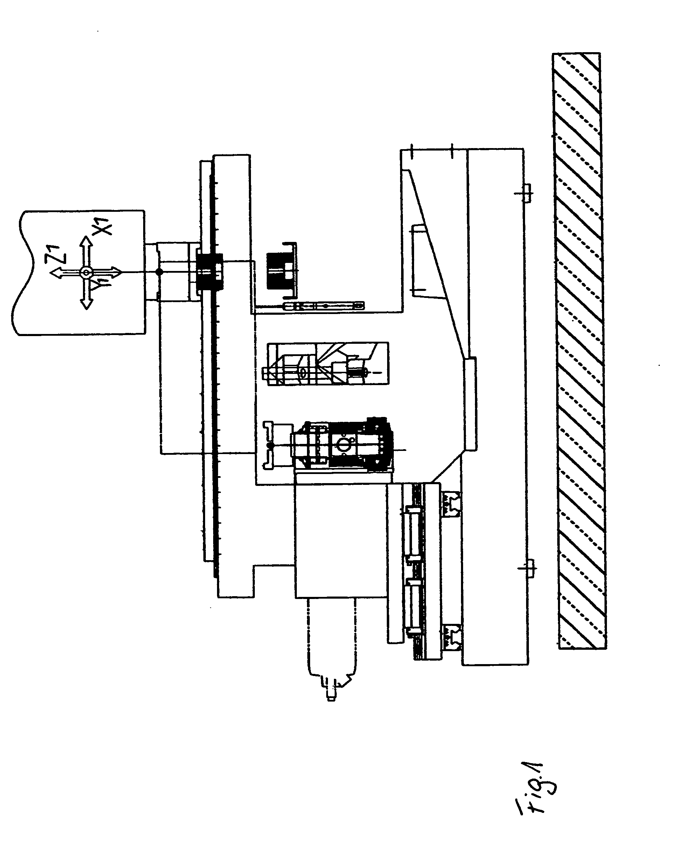

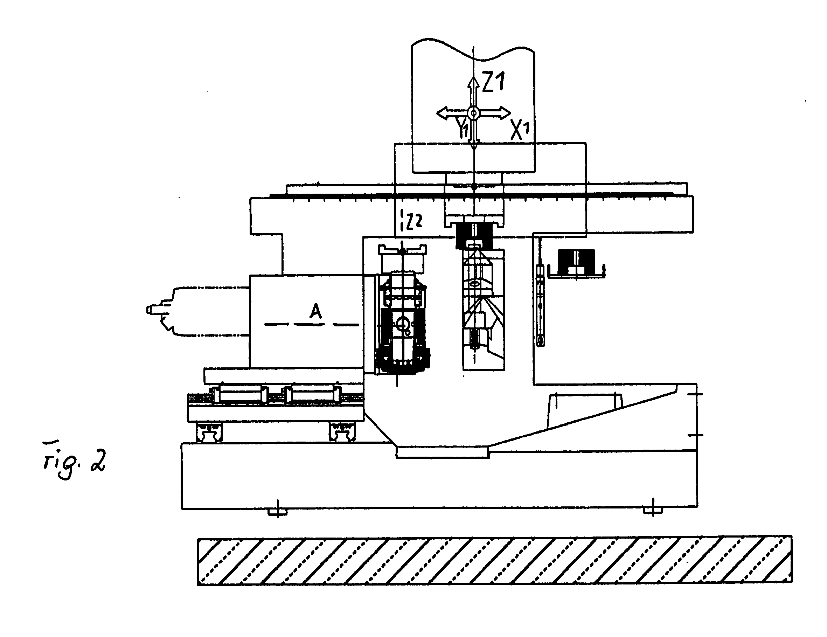

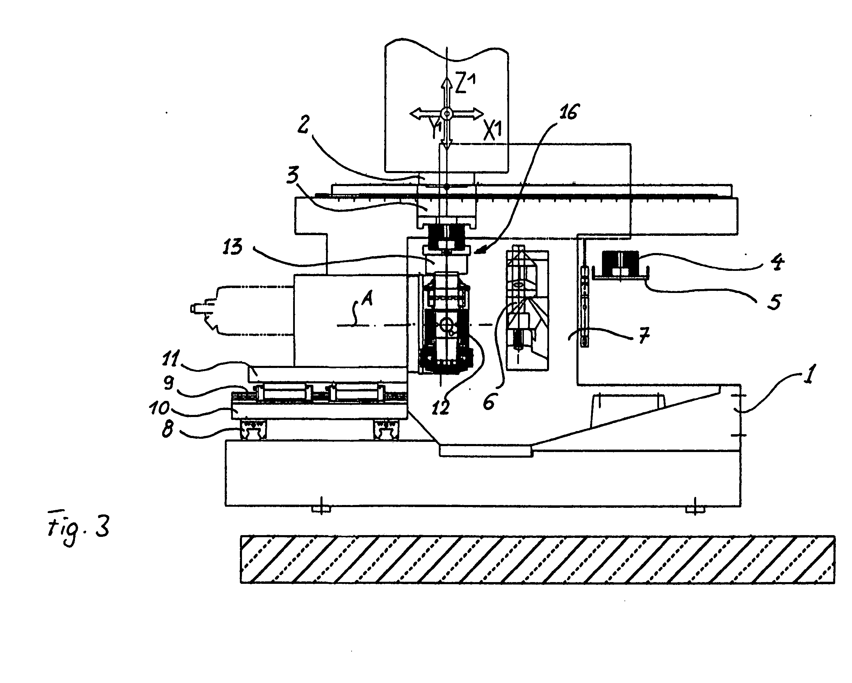

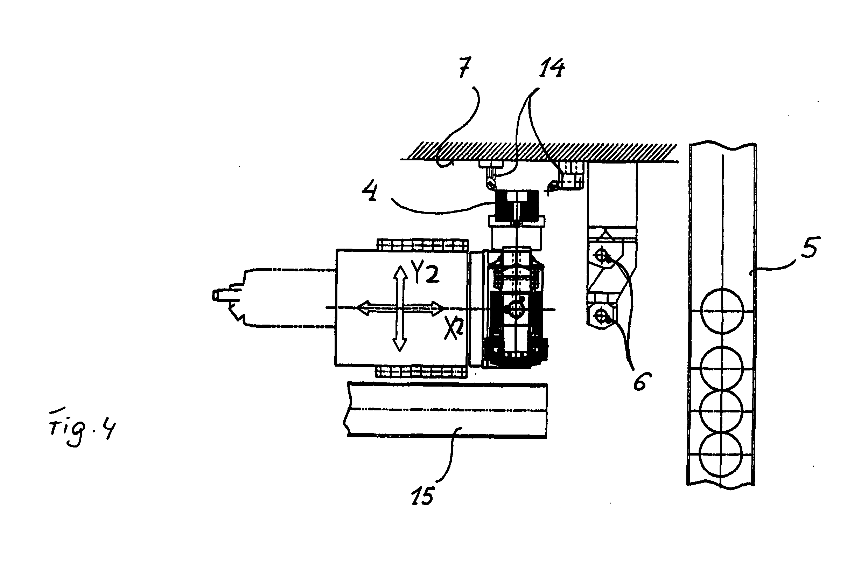

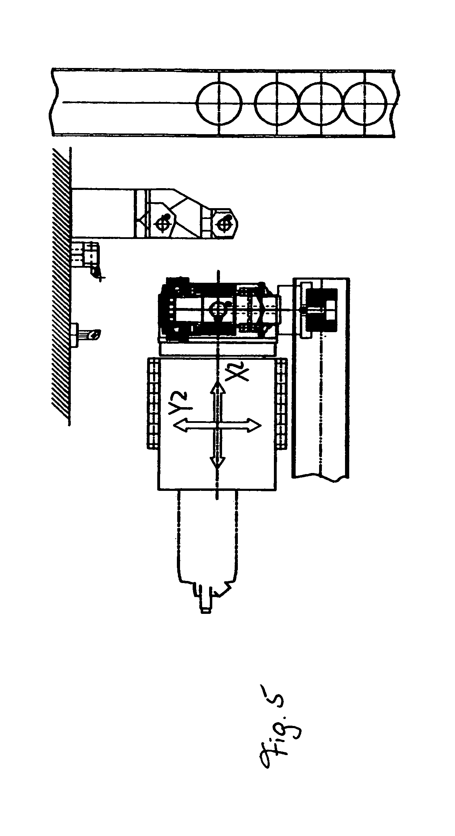

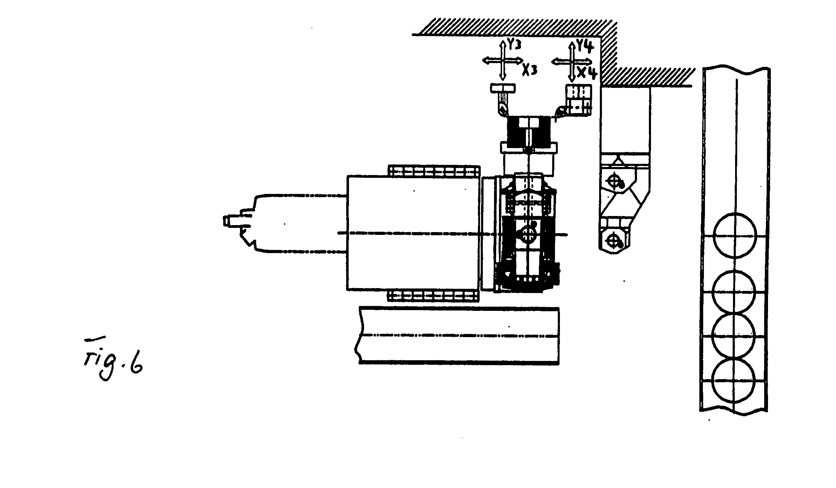

Die Erfindung wird im Folgenden anhand der Figuren 1 bis 6 anhand einer beispielhaften erfindungsgemäßen Drehmaschine schematisch näher erläutert:
- Figur 1: eine Vertikaldrehmaschine in einer Seitenansicht, bei der Aufnahme eines Werkstücks von der Bereitstellungsstation,
- Figur 2: die Vertikaldrehmaschine gem. Figur 1 während der Bearbeitung der Vorderseite an einem Zusatzwerkzeug,
- Figur 3: die Vertikaldrehmaschine gem. Figur 1 bei der Übergabe eines Werkstücks an die Gegenspindel,
- Figur 4: die Vertikaldrehmaschine gem. Figur 1 in Draufsicht während der Bearbeitung eines von der Gegenspindel gehaltenen Werkstücks,
- Figur 5: eine Vertikaldrehmaschine gem. Figur 4 bei der Ablage eines Werkstücks auf die Ablagestation,
- Figur 6: eine alternative Ausführungsform der Vertikaldrehmaschine gem. Figur 4 mit zweiachsigem Vorschub für die der Gegenspindel zugeordneten Werkzeuge.

Die beispielhafte erfindungsgemäße Drehmaschine verfügt über ein Maschinengestell 1, an dem die Hauptspindel 2 entlang der Achse X¹ verfahrbar ist. Die Hauptspindel 2 ist an ihrem unteren Ende mit einer beispielhaft als Spannfutter ausgeführten Werkstückaufnahme 3 ausgestattet, die ein Werkstück 4 aufnehmen kann. Die beispielhafte Hauptspindel 2 ist weiterhin entlang der Achsen Z¹, welche ihrer Spindelachse entspricht und der Y¹ verfahrbar. Eine Werkstückbereitstellungsstation 5 kann die Werkstücke in eine Aufnahmeposition unterhalb der Hauptspindel 2 transportieren, wo diese von der Hauptspindel 2 aufgrund ihrer mehrachsigen Verschieblichkeit aufgenommen werden können. Die Bewegungsachsen X¹, Y¹ und Z¹ der Hauptspindel 2 sind bei der beispielhaften Drehmaschine senkrecht zueinander orientiert.

Die beispielhafte Drehmaschine verfügt über die multifunktionelle Seitenwand 7, die am Maschinengestell 1 vorgesehen ist. An dieser Seitenwand 7 sind Werkzeuge 6 angeordnet, mit denen ein von der Hauptspindel 2 gehaltenes Werkstück bearbeitet werden kann. Die Bearbeitungsposition befindet sich dabei zwischen der Werkstückbereitstellungsstation 5 und der Gegenspindel 12.

Die Gegenspindel 12 ist dabei derart schwenkbar gelagert, dass die Orientierung ihrer Spindelachse Z² um die Achse A rotiert werden kann. Weiterhin ist sie mit dem Schlitten 10 auf den Führungen 8 entlang der Achse Y² verfahrbar und mittels des Querschlittens 11 und den Führungen 9 entlang der Achse X² verfahrbar. Die Achsen Y² und X² sind dabei beispielhaft parallel zu den entsprechenden Achsen Y¹ und X¹ der Hauptspindel orientiert. Die Gegenspindel 12 trägt an ihrem Ende ein Werkstückspannmittel 13. Die Hauptspindel 2 und die Gegenspindel 12 lassen sich in eine Position verfahren, in der deren Spindelachsen Z¹ und Z² zusammenfallen und so die Übergabe des Werkstücks von der Hauptspindel 2 auf die Gegenspindel 12 ermöglichen.

Wird die beispielhafte Gegenspindel 12 in eine Position verschwenkt, die beispielsweise einer Verschwenkung um die Achse A von 45° relativ zur Werkstückübergabeposition entspricht, so kann das an der Gegenspindel 12 aufgenommene Werkstück 4 im Fall der beispielhaften Maschine von an der Seitenwand 7 befestigten Werkzeugen 14 bearbeitet werden. Vorschub und Zustellung werden dabei im Fall der beispielhaften Maschine von den Querschlitten 10 und 11 ausgeführt.

Die beispielhafte Maschine ermöglicht nach der Bearbeitung eine Verschwenkung der Gegenspindel 12 in eine Position, in der sich das Spannmittel 13 der Gegenspindel 12 oberhalb der Werkstückablagestation 15 befindet. Wenn das Spannmittel 13 das Werkstück 4 in dieser Position freigibt, kommt es auf der Werkstückablagestation 15 zu liegen, die beispielsweise als Förderband gestaltet sein kann, mit dem das Werkstück 4 abtransportiert werden kann. Im gezeigten Beispiel geschieht dies in einer horizontalen Ausrichtung des Gegenspindelachse Z², daher ist es sinnvoll, einen Auswerfer an der Gegenspindel vorzusehen, um das Lösen des Werkstücks 4 von der Gegenspindel 12 sicherzusetellen.

Alternativ oder ergänzend zur Verfahrbarkeit der Gegenspindel 12 entlang der Achsen Y² und X² können die Werkzeuge 14 entlang der Achsen Y³ und X³ bzw. Y⁴ und X⁴ verfahrbar angeordnet sein, um Zustellung und Vorschub bei der Bearbeitung des in der Gegenspindel 12 aufgenommenen Werkstücks 4 zu ermöglichen. Alternativ oder ergänzend zu den Werkzeugen 6 können weitere Werkzeuge gemeinsam mit der Gegenspindel 12 an einem um die Achse A schwenkbaren Werkzeugträger aufgenommen sein, die zur Bearbeitung des an der Hauptspindel 2 aufgenommenen Werkstücks 4 dienen.

## Patentansprüche

1. Vertikaldrehmaschine mit einer Hauptspindel (2), einer Gegenspindel (12), mindestens einem zur hängenden Bearbeitung des an der Hauptspindel (2) aufgenommenen Werkstücks geeignet angeordnetem Werkzeug, einer Werkstückbereitstellungsstation (5) und einer Werkstückablagestation (15), wobei die Hauptspindel (2) entlang einer von der Hauptspindelachse (Z¹) verschiedenen, vorzugsweise zur Hauptspindelachse (Z¹) senkrechten, Richtung (X¹) entlang eines Maschinengestells (1) verfahrbar ist und geeignet ist, an einer Position entlang des Verfahrwegs ein Werkstück von der Werkstückbereitstellungsstation (5) aufzunehmen, wobei die Gegenspindel (12) von einer ersten Position, in der durch Zusammenfallen der Spindelachse (Z¹) der Hauptspindel (2) mit der Spindelachse (Z²) der Gegenspindel (12) die Übergabe des Werkstücks von der Hauptspindel (2) auf die Gegenspindel (12) ermöglicht ist, um eine Achse (A) in eine zweite Position verschwenkbar ist, in der das von der Gegenspindel gehaltene Werkstück von einem weiteren Werkzeug (14) bearbeitet werden kann, wobei die Orientierungsrichtung der Schwenkachse (A) der Gegen-spindel (12) der Spindelachse der Gegenspindel (12) in der zweiten Position verschieden von der Spindelachse (Z¹) und Verfahrrichtung (x¹) der Hauptspindel verschieden von der Spindelachse (Z¹) der Hauptspindel (2) ist und/oder die Orientierungsrichtung entlang des Maschinenbettes ist,
**dadurch gekennzeichnet,**
**dass** die Gegenspindel (12) in eine dritte Position verschwenkbar ist, in der die Übergabe des Werkstücks (4) an die Ablagestation (15) ermöglicht ist.

2. Vertikaldrehmaschine nach Anspruch 1,
**dadurch gekennzeichnet,**
**dass** die Gegenspindel (12) an einem um die Schwenkachse (A) der Gegenspindel (12) schwenkbaren Werkzeugträger, insbesondere einem Werkzeugrevolver, angeordnet ist.

3. Vertikaldrehmaschine nach Anspruch 1 oder 2,
**dadurch gekennzeichnet,**
**dass** an einer dem Arbeitsraum zugewandten Seitenwand (7) des Maschinengestells (1) im Verfahrbereich der Hauptspindel (2) zwischen der Werkstückbereitstellungsstation (5) und der Position, in der durch Zusammenfallen der Spindelachse (Z¹) der Hauptspindel (2) mit der Spindelachse (Z²) der Gegenspindel (12) die Übergabe des Werkstücks von der Hauptspindel (2) auf die Gegenspindel (12) ermöglicht ist, mindestens ein zusätzliches Werkzeug angeordnet ist.

4. Vertikaldrehmaschine nach einem der vorigen Ansprüche,
**dadurch gekennzeichnet,**
**dass** das weitere Werkzeug (14), mit dem das von der Gegenspindel gehaltene Werkstück bearbeitet werden kann, an der dem Arbeitsraum zugewandten Seitenwand (7) des Maschinengestells (1) angeordnet ist.

5. Vertikaldrehmaschine nach einem der vorigen Ansprüche,
**dadurch gekennzeichnet,**
**dass** eine Mehrzahl weiterer Werkzeuge (14), mit denen das von der Gegenspindel gehaltene Werkstück, vorzugsweise in einer Mehrzahl Verschwenkpositionen der Gegenspindel (12) um deren Verschwenkachse (A), bearbeitbar ist, vorhanden ist.

6. Vertikaldrehmaschine nach einem der vorigen Ansprüche,
**dadurch gekennzeichnet,**
**dass** zwischen dem weiteren Werkzeug (14) und der Gegenspindel (12) eine Relativbewegung entlang der Spindelachse (Z²) der Gegenspindel (12) in der Verschwenkpositionen der Gegenspindel (12) um deren Verschwenkachse (A), in der das Werkstück (4) mit dem weiteren Werkzeug (14) bearbeitet werden kann, ermöglicht ist.

7. Vertikaldrehmaschine nach einem der vorigen Ansprüche,
**dadurch gekennzeichnet,**
**dass** die Werkstückablage (15) unterhalb der Gegenspindel (12), in der Verschwenkpositionen der Gegenspindel (12) um deren Verschwenkachse (A), in der das Werkstück (4) mit dem weiteren Werkzeug (14) bearbeitet werden kann, angeordnet ist.

8. Vertikaldrehmaschine nach einem der vorigen Ansprüche,
**dadurch gekennzeichnet,**
**dass** die Orientierungsrichtung der Spindelachse (Z²) der Gegenspindel (12) in der Verschwenkpositionen der Gegenspindel (12) um deren Verschwenkachse (A), in der das Werkstück (4) mit dem weiteren Werkzeug (14) bearbeitet werden kann, in einem rechten Winkel zur Richtung (X¹) entlang der die Hauptspindel (2) entlang des Maschinengestells (1) verfahren werden kann und/oder der Orientierung der Spindelachse (Z¹) der Hauptspindel orientiert ist.

9. Vertikaldrehmaschine nach einem der vorigen Ansprüche,
**dadurch gekennzeichnet,**
**dass** die Gegenspindel (12) relativ zum Maschinengestell (1) entlang ihrer Schwenkachse (A) und/oder parallel zur Richtung (X¹) entlang der die Hauptspindel (2) entlang des Maschinengestells (1) verfahren werden kann, verfahren werden kann.

10. Vertikaldrehmaschine nach einem der vorigen Ansprüche,
**dadurch gekennzeichnet,**
**dass** die Gegenspindel (12) relativ zum Maschinengestell (1) in einer von ihrer Schwenkachse (A) und/oder der Richtung (X¹), entlang der die Hauptspindel (2) entlang des Maschinengestells (1) verfahren werden kann, linear unabhängigen, vorzugsweise senkrecht orientierten, Richtung verfahren werden kann.

11. Vertikaldrehmaschine nach einem der vorigen Ansprüche,
**dadurch gekennzeichnet,**
**dass** die Richtung (X¹), entlang der die Hauptspindel (2) entlang des Maschinengestells (1) verfahren werden kann, waagerecht entlang des Maschinengestells (1) verläuft.

12. Vertikaldrehmaschine nach einem der vorigen Ansprüche,
**dadurch gekennzeichnet,**
**dass** in der Verschwenkpositionen der Gegenspindel (12) um deren Verschwenkachse (A), in der die Übergabe des Werkstücks (4) an die Werkstückablagestation (15) ermöglicht ist, die Übergabe durch die Wirkung der Schwerkraft auf das Werkstück (4) ermöglicht ist.

## Claims

1. Vertical lathe with a main spindle (2), a counter spindle (12), at least one tool arranged appropriately for the suspended machining of the workpiece mounted on the main spindle (2), a workpiece supply station (5) and a workpiece deposit station (15), wherein the main spindle (2) is movable along a machine frame (1) in a direction (x¹) which is different from the main spindle axis (z¹), preferably perpendicular to the main spindle axis (z¹), and is suitable for receiving at a position along the travel path a workpiece from the workpiece supply station (5), wherein the counter spindle (12) can be pivoted from a first position, in which by bringing the spindle axis (z¹) of the main spindle (2) to coincide with the spindle axis (z²) of the counter spindle (12) it becomes possible for the workpiece to transfer from the main spindle (2) to the counter spindle (12), about an axis (A) into a second position in which the workpiece held by the counter spindle can be machined by a further tool (14) wherein the orientation direction of the swivel axis (A) of the counter spindle (12) is different from the spindle axis (z¹) of the main spindle (2) and/or the orientation direction of the spindle axis of the counter spindle (12) in the second position is different from the spindle axis (z¹) and travel direction (x¹) of the main spindle (2) along the machine bed, **characterised in that** the counter spindle (12) can be pivoted into a third position in which the transfer of the workpiece (4) to the deposit station (15) becomes possible.

2. Vertical lathe according to claim 1
**characterised in that**
the counter spindle (12) is mounted on a tool support, more particularly a tool turret, which is able to pivot about the swivel axis (A) of the counter spindle (12).

3. Vertical lathe according to claim 1 or 2
**characterised in that**
at least one additional tool is mounted on a side wall (7) of the machine frame (1) facing the work area in the travel zone of the main spindle (2) between the workpiece supply position (5) and the position in which by bringing the spindle axis (z¹) of the main spindle (2) to coincide with the spindle axis (z²) of the counter spindle (12) the transfer of the workpiece from the main spindle (2) to the counter spindle (12) becomes possible.

4. Vertical lathe according to one of the preceding claims
**characterised in that**
the further tool (14) with which the workpiece held by the counter spindle can be machined, is mounted on the side wall (7) of the machine frame (1) facing the work area.

5. Vertical lathe according to one of the preceding claims
**characterised in that**
there are a number of further tools (14) with which the workpiece held by the counter spindle can be machined, preferably in a number of swivel positions of the counter spindle (12) about its swivel axis (A).

6. Vertical lathe according to one of the preceding claims
**characterised in that**
between the further tool (14) and the counter spindle (12) relative movement is possible along the spindle axis (z²) of the counter spindle (12) in the swivel positions of the counter spindle (12) about its swivel axis (A) in which the workpiece (4) can be machined with the further tool (14).

7. Vertical lathe according to one of the preceding claims
**characterised in that**
the workpiece deposit (15) is mounted underneath the counter spindle (12) in the swivel positions of the counter spindle (12) about its swivel axis (A) in which the workpiece (4) can be machined with the further tool (14).

8. Vertical lathe according to one of the preceding claims
**characterised in that**
the orientation direction of the spindle axis (z²) of the counter spindle (12) in the swivel positions of the counter spindle (12) about its swivel axis (A) in which the workpiece (4) can be machined with the further tool (14), is orientated at a right angle to the direction (x¹) along which the main spindle (2) can be moved along the machine frame (1) and/or the orientation of the spindle axis (z¹) of the main spindle.

9. Vertical lathe according to any of the preceding claims
**characterised in that**
the counter spindle (12) can be moved relative to the machine frame (1) along its swivel axis (A) and/or parallel to the direction (x¹) along which the main spindle (2) can be moved along the machine frame (1).

10. Vertical lathe according to one of the preceding claims
**characterised in that**
the counter spindle (12) can be moved relative to the machine frame (1) in a direction which is linearly independent of its swivel axis (A) and/or the direction (x¹) along which the main spindle (2) can be moved along the machine frame (1), preferably in a perpendicularly orientated direction.

11. Vertical lathe according to one of the preceding claims
**characterised in that**
the direction (x¹) along which the main spindle (2) can be moved along the machine frame (1) runs horizontally along the machine frame (1).

12. Vertical lathe according to one of the preceding claims
**characterised in that**
in the swivel positions of the counter spindle (12) about its swivel axis (A) in which the transfer of the workpiece (4) to the workpiece deposit station (15) becomes possible, transfer becomes possible by the action of gravity on the workpiece (4).

## Revendications

1. Tour vertical avec au moins une broche principale (2), une contre-broche (12), au moins un outil, agencé adéquatement pour l'usinage en l'air de la pièce fixée sur la broche principale (2), un poste (5) d'alimentation en pièces et un poste (15) de réception de pièces (15), sachant que la broche principale (2) peut être déplacée le long d'un bâti (1) de la machine, dans une direction (X¹) différente de l'axe (Z¹) de la broche principale, de préférence perpendiculaire à l'axe (Z¹) de la broche principale, et, dans une position le long du parcours, est apte à prélever une pièce au poste (5) d'alimentation en pièces, sachant que la contre-broche (12) peut pivoter autour d'un axe (A), d'une première position, dans laquelle, par coïncidence de l'axe (Z¹) de la broche principale (2) et de l'axe (Z²) de la contre-broche (12), la pièce à usiner peut être transférée de la broche principale (2) à la contre-broche (12), dans une deuxième position, dans laquelle la pièce, maintenue par la contre-broche, peut être usinée par un outre outil (14), la direction d'orientation de l'axe de pivotement (A) de la contre-broche (12) étant différente de l'axe (Z¹) de la broche principale (2) et / ou la direction d'orientation de l'axe de la contre-broche (12) dans la deuxième position étant différente de l'axe (Z¹) de la broche principale et la direction de déplacement (X¹) de la broche principale (2) étant située long du lit de la machine,
**caractérisé en ce que**
la contre-broche (12) peut être pivotée dans une troisième position, dans laquelle le transfert de la pièce (4) au poste de réception (15) est possible.

2. Tour vertical selon la revendication 1,
**caractérisé en ce que**
la contre-broche (12) est agencée sur un porte-outil, en particulier sur une tourelle revolver, qui peut pivoter autour de l'axe de pivotement (A) de la contre-broche (12) .

3. Tour vertical selon la revendication 1 ou 2,
**caractérisé en ce que**,
dans une paroi latérale (7) du bâti de la machine (1), orientée vers la zone d'usinage, dans le domaine de déplacement de la broche principale (2), entre le poste (5) d'alimentation en pièces et la position dans laquelle le transfert des pièces, de la 2 à la 12, est rendu possible par coïncidence de l'axe (Z¹) de la broche principale (2) et de l'axe (Z²) de la contre-broche (12), au moins un outil supplémentaire est agencé.

4. Tour vertical selon l'une des revendications précédentes,
**caractérisé en ce que**
l'autre outil (14), au moyen duquel la pièce, maintenue par la contre-broche, peut être usinée, est disposé sur la paroi latérale (7) du bâti de la machine (1), tournée vers la zone d'usinage.

5. Tour vertical selon l'une des revendications précédentes,
**caractérisé en ce que**
sont prévus plusieurs autres outils (14), avec lesquels la pièce, maintenue par la contre-broche, peut être traitée, de préférence dans une pluralité de positions de pivotement de la contre-broche (12) autour de son axe de pivotement (A).

6. Tour vertical selon l'une des revendications précédentes,
**caractérisé en ce que**,
entre l'autre outil (14) et la contre-broche (12), est rendu possible un mouvement relatif le long de l'axe (Z²) de la contre-broche (12), dans la position de pivotement de la contre-broche (12) autour de son axe de pivotement (A), dans laquelle la pièce (4) peut être usinée avec l'autre outil (14).

7. Tour vertical selon l'une des revendications précédentes,
**caractérisé en ce que**
le poste (15) d réception de pièces est disposé au-dessous de la contre-broche (12), dans la position de pivotement de la contre-broche (12) autour de son l'axe de pivotement (A), dans laquelle la pièce (4) peut être usinée avec l'autre outil (14).

8. Tour vertical selon l'une des revendications précédentes,
**caractérisé en ce que**
la direction d'orientation de l'axe (Z²) de la contre-broche (12) dans la position de pivotement de la contre-broche (12) autour de son axe de pivotement (A), dans laquelle la pièce (4) peut être usinée avec l'autre outil (14), est à angle droit par rapport à la direction (X¹), le long de laquelle la broche principale (2) peut être déplacée le long du bâti de la machine (1) et / ou de la direction d'orientation de l'axe (Z¹) de la broche principale.

9. Tour vertical selon l'une des revendications précédentes,
**caractérisé en ce que**
la contre-broche (12) peut être déplacée par rapport au bâti de la machine (1) le long de son axe de pivotement (A) et / ou parallèlement à la direction (X¹), le long de laquelle la broche principale (2) peut être déplacée le long du bâti de la machine (1).

10. Tour vertical selon l'une des revendications précédentes,
**caractérisé en ce que**
la contre-broche (12) peut être déplacée, par rapport au bâti de la machine (1), dans une direction linéairement indépendante de son axe de pivotement (A) et / ou de la direction (X¹), le long de laquelle la broche principale (2) peut être déplacée le long du bâti de la machine (1), de préférence perpendiculairement.

11. Tour vertical selon l'une des revendications précédentes,
**caractérisé en ce que**
la direction (X¹), le long de laquelle la broche principale (2) peut être déplacée le long du bâti de la machine (1), s'étend horizontalement le long dudit bâti de la machine (1).

12. Tour vertical selon l'une des revendications précédentes,
**caractérisé en ce que**,
dans la position de pivotement de la contre-broche (12) autour de son axe de pivotement (A), dans laquelle le transfert de la pièce (4) au poste (15) de réception de pièces est rendu possible, le transfert est rendu possible par l'effet de la pesanteur exercé sur la pièce (4).
